Europäisches Patentamt

European Patent Office

Office européen des brevets

(11) Veröffentlichungsnummer: **0 503 172 A1**

## (12) EUROPÄISCHE PATENTANMELDUNG

(21) Anmeldenummer: **91250071.7**

(51) Int. Cl.⁵: **G02B 6/28**, G02B 6/255

(22) Anmeldetag: **13.03.91**

(43) Veröffentlichungstag der Anmeldung:
**16.09.92 Patentblatt 92/38**

(84) Benannte Vertragsstaaten:
**AT BE CH DE DK ES FR GB GR IT LI LU NL SE**

(71) Anmelder: **TELECONNECT GmbH
Am Lehmberg 54
O-8029 Dresden(DE)**

(72) Erfinder: **Nürnberger, Gerald, Dr. Ing.
Schäferstrasse 19
O-8010 Dresden(DE)**
Erfinder: **Weise, Albrecht, Dipl.-Ing.
Bonner Strasse 23
O-8028 Dresden(DE)**
Erfinder: **Ebermann, Frank
Herzogwalder Strasse 1
O-8038 Dresden(DE)**

(54) **Verfahren und Anordnung zum Herstellen optischer Baugruppen aus Lichtwellenleitern.**

(57) Die Erfindung betrifft ein Verfahren und eine Anordnung zum Herstellen optischer Baugruppen aus Lichtwellenleitern (6), mit denen mindestens ein oder mehrere Lichtwellenleiter (6), die in einer Vorrichtung zum Ziehen oder Stauchen eingespannt sind, erwärmt und in Abhängigkeit von den optischen Parametern der optischen Baugruppe geschmolzen und verformt werden. Zum reproduzierbaren und gemäß eines vorgegebenen Programmes ortsabhängigen Erwärmen und Schmelzen der Lichtwellenleiter (6) in einem über die Abrißbreite eines Lichtbogens hinausgehenden Bereich wird ein Wechselstromlichtbogen verwendet, der mit einem Federschwinger (3,4,5) durch pendelnde Bewegung der den Wechselstromlichtbogen führenden Elektroden (1) entlang der Lichtwellenleiter (6) geführt wird. Zum Steuern und Aufrechterhalten der Schwingungsamplitude des Federschwingers (3,4,5) ist ein erster Elektromagnet (7) und zum Steuern der Intensität des Wechselstromlichtbogens in Abhängigkeit vom aktuellen Aufenthaltsort des Federschwingers (3,4,5) ein Wegaufnehmer vorgesehen. Darüber hinaus ist auf dem Federschwinger (3,4,5) ein zweiter Elektromagnet (9) angeordnet, mit dem der Wechselstromlichtbogen wechselseitig entlang der Lichtwellenleiter (6) geführt werden kann.

Fig. 1

EP 0 503 172 A1

Die Erfindung betrifft ein Verfahren und eine Anordnung zum Herstellen optischer Baugruppen aus Lichtwellenleitern, mit denen mindestens ein oder mehrere aneinanderliegend angeordnete Lichtwellenleiter, die in einer Vorrichtung zum Ziehen oder Stauchen eingespannt sind, mindestens in einem über 2 mm hinausgehenden Bereich erwärmt und in Abhängigkeit von den optischen Parametern der optischen Baugruppe plastisch verformt oder in einem Längenbereich miteinander verschmolzen und verformt werden, um beispielsweise optische Dämpfungsglieder, Lichtverteiler oder optische Koppler herzustellen.

Optische Baugruppen aus Lichtwellenleitern ermöglichen den Aufbau vielfältiger Strukturen optischer Übertragungssysteme, deren Wirkungsgrad und Zuverlässigkeit entscheidend von der Qualität der optischen Parameter dieser Baugruppen bestimmt wird.

Zum Herstellen von doppelkonisch geschmolzenen optischen Kopplern mit niedrigen Verlusten aus Lichtwellenleitern ist ein Verfahren bekannt (DE-OS 32 36 810), bei dem zunächst die Lichtwellenleiter aufgeheizt und die aufgeheizten Lichtwellenleiter zu einem doppelkonischen Koppler verformt werden. In weiteren Schritten wird dann entweder die dünnste doppelkonisch geschmolzene Stelle erneut aufgeheizt, die aufgeheizte Stelle zur Bildung eines Glasballes zusammengedrückt und nach nochmaligem Aufheizen des Glasballes zu einem symmetrischen doppelten Konus an der dünnsten Stelle geformt oder es werden ein bereits doppelkonisch geformter Koppler an der dünnsten Stelle zum Trennen voneinander eingekerbt, die getrennten Stellen aufgeheizt und die aufgeheizten Stellen durch Zusammendrücken wiederverbunden. Das Aufheizen erfolgt mit einem Mikrobrenner, der mit Oxypropan gespeist wird. Es sind zahlreiche Verfahrensschritte erforderlich und der Flammendruck des Mikrobrenners birgt die Gefahr in sich, daß Verformungen im Taillienbereich der Koppler auftreten. Darüber hinaus beeinflussen auf den Lichtwellenleiter auftreffende OH-Ionen die optischen Eigenschaften der Baugruppe nachteilig.

Im Zusammenhang mit einem Lichtverteiler sind weiterhin ein Verfahren und eine Anordnung bekannt (DE-OS 28 12 346), die zum Aufheizen und Schmelzen beziehungsweise Verschweißen der Lichtwellenleiter ein Heizelement verwenden, das von einer Spule mit elliptischem Querschnitt gebildet und mit Wechselstrom gespeist wird. Die Lichtwellenleiter sind in einer Vorrichtung zum Ziehen oder Stauchen eingespannt und werden in Abhängigkeit von den optischen Parametern der optischen Baugruppe geschmolzen und verformt. Durch den gleichzeitigen Erwärmungs- und Ziehprozeß der Lichtwellenleiter kommt es zur Bildung der Taper- und Interferenzbereiche, deren Abmessung und Form wesentlich von der Temperatur, der Breite des Temperaturfeldes und der Ziehgeschwindigkeit beeinflußt werden. Hierzu werden die Lichtwellenleiter durch das Heizelement hindurchgeführt und so ausgerichtet, daß ihre zu verschmelzenden Abschnitte im Heizelement liegen. Die gesamte Anschlußlänge der optischen Baugruppe ist zur Vorbereitung des Verfahrens und zum Entnehmen aus der Vorrichtung durch das Heizelement hindurchzuführen und aufgrund der zum Schmelzen der Quarzglas-Lichtwellenleiter notwendigen hohen Temperaturen ist eine starke Oxidation des Heizelementes zu erwarten, die die Reproduzierbarkeit des Herstellungsprozesses nachteilig beeinflußt.

Weiterhin ist zum Verschmelzen von Lichtwellenleitern, insbesondere zum Herstellen einer Spleißverbindung zwischen zwei Lichtwellenleiterenden bekannt, einen mit einem Magnetfeld abgelenkten Lichtbogen zu verwenden (US 3 960 531). Der auf eine Ionisierung frei beweglicher Moleküle und Ausbildung eines Plasmas zurückzuführende Lichtbogen, dessen Teilchendichte, Temperatur und elektrische Leitfähigkeit in außerordentlich weiten Grenzen liegen kann und eine relativ schmale Brennzone aufweist, wird zum Verbreitern der Brennzone periodisch mit einem Magnetfeld abgelenkt. Die erreichbare Ablenkbreite ist jedoch gering, da bei einer Auslenkung um mehr als 2 mm die Wahrscheinlichkeit eines Bogenabrisses zunimmt, so daß eine weit über den Bereich von 2 mm hinausgehende Erwärmung, die zum Herstellen optischer Baugruppen aus Lichtwellenleitern erforderlich ist, nicht erreicht wird.

Hier will die Erfindung Abhilfe schaffen. Die Erfindung, wie sie in den Ansprüchen gekennzeichnet ist, löst die Aufgabe, ein Verfahren und eine Anordnung zur Durchführung des Verfahrens zu schaffen, die das Herstellen optischer Baugruppen aus Lichtwellenleitern mit einer geringeren Anzahl von Verfahrensschritten reproduzierbar ermöglichen, die optische Baugruppe während des Herstellungsprozesses nicht asymmetrisch verformen oder durch OH-Ionen nachteilig beeinflussen und durch optimales Verschmelzen und Verformen das Herstellen unterschiedlicher und gleichartiger optischer Baugruppen mit qualitativ hochwertigen optischen Parametern und geringem Aufwand ermöglichen.

Die durch die Erfindung erreichten Vorteile bestehen im wesentlichen darin, daß ein über die Abrißbreite eines Lichtbogens hinausgehendes Erwärmen beziehungsweise Schmelzen eines oder mehrerer Lichtwellenleiter erreicht und die optische Baugruppe während des Herstellungsprozesses weder durch den Flammdruck eines Mikrobrenners asymmetrisch verformt oder durch OH-Ionen nachteilig beeinflußt wird, am verwendeten Heizelement trotz der hohen Temperaturen keine Veränderungen auftreten, die die Reproduzierbarkeit des Verfahrens gefährden und mit einem auch örtlich steuerbaren Temperaturfeld optimale Formen optischer Baugruppen herstellbar sind, die die Voraussetzung für qualitativ hochwertige optische Parameter mit einer geringen Anzahl von Verfahrensschritten bilden. Außerdem kann die zum Erwärmen und Schmelzen der Lichtwellenleiter erforderliche Vorrichtungseinheit aus dem Schmelz- beziehungsweise Verformungsbereich herausgeschwenkt werden, wodurch ein Verkapseln der optischen Baugruppe unter Beibehaltung der Einspannung ermöglicht wird.

Im folgenden wird die Erfindung anhand von einen Ausführungsweg darstellenden Zeichnungen näher erläutert. Es zeigen

Figur 1 eine Prinzipskizze einer Vorrichtung zum Herstellen eines optischen Schmelzkopplers,

Figur 2 eine Anordnung zum wechselseitigen Ablenken eines Wechselstromlichtbogens und

Figur 3 einen Wegaufnehmer.

In den Figuren ist eine Vorrichtung zur Durchführung des Verfahrens zum Herstellen optischer Baugruppen aus Lichtwellenleitern 6 dargestellt. Das Verfahren wird zur Vereinfachung anhand des Herstellungsprozesses eines taperförmigen Schmelzkopplers aus zwei Lichtwellenleitern 6 erläutert und besteht in seinem Grundsatz darin, daß zum Erwärmen und Schmelzen der Lichtwellenleiter 6 in einem über die Abrißbreite eines Lichtbogens hinausgehenden Bereich ein Wechselstromlichtbogen verwendet wird, der durch pendelnde Bewegung der den Wechselstromlichtbogen führenden Elektroden 1 mit einem Federschwinger 3,4,5 entlang der Lichtwellenleiter 6 geführt wird. Die Lichtwellenleiter 6 werden hierzu in einer Vorrichtung zum Ziehen oder Stauchen der Lichtwellenleiter 6 aneinanderliegend eingespannt, erwärmt und in Abhängigkeit von den optischen Parametern der optischen Baugruppe geschmolzen und verformt. Ein vollständiges Aneinanderliegen der zum Herstellen eines taperförmigen Schmelzkopplers parallel eingespannten Lichtwellenleiter 6 wird durch ein Vernetzen der Lichtwellenleiter 6 mit dem ebenfalls zum Reinigen der Lichtwellenleiter 6 verwendeten Aceton vor dem Erwärmungs- und Schmelzprozeß begünstigt. Das Erwärmen und Schmelzen der Lichtwellenleiter 6 erfolgt durch pendelnde Bewegung der den Wechselstromlichtbogen führenden Elektroden 1 entlang der Lichtwellenleiter 6, wodurch sich ein über die Abrißbreite eines Lichtbogens hinausgehendes Temperaturfeld ausbildet, das zur Optimierung der Formgebung des taperförmigen Schmelzkopplers während des Ziehprozesses in seiner Breite und durch Steuerung des Lichtbogenstromes in Abhängigkeit vom aktuellen Aufenthaltsort des Federschwingers 3,4,5 auch in seiner örtlichen Intensität variiert werden kann. Zum Herstellen optischer Baugruppen aus mehr als zwei Lichtwellenleitern 6 ist es darüber hinaus zweckmäßig, den Wechselstromlichtbogen wechselseitig entlang der Lichtwellenleiter 6 zu führen.

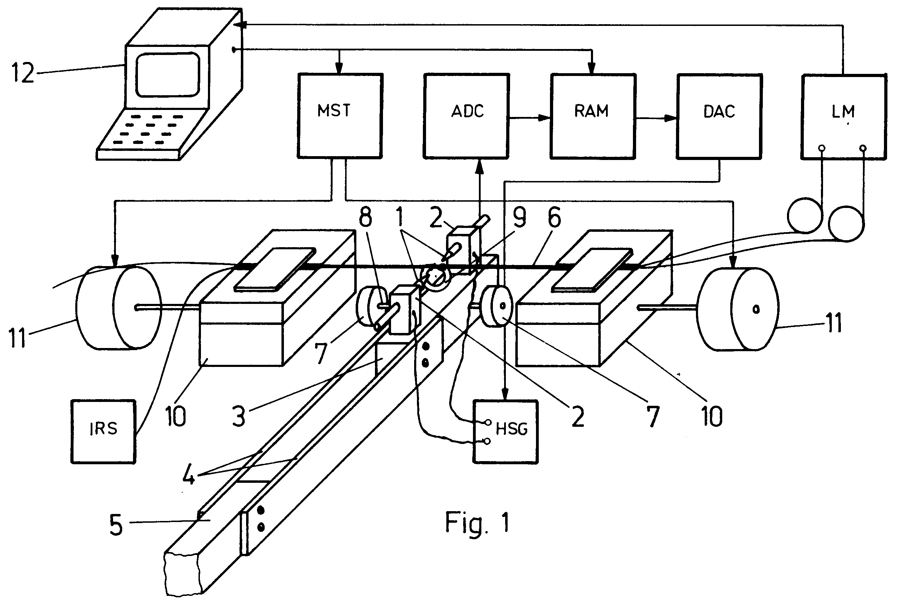

Zur Durchführung des Verfahrens wird eine Figur 1 entsprechende Vorrichtung verwendet, die aus einem einseitig eingespannten, mit einem ersten Elektromagneten 7 zum Steuern und Aufrechterhalten seiner Schwingungsamplitude angeregten Federschwinger 3,4,5 besteht, an dessen schwingungsfähiger Seite senkrecht zur Pendelbewegung des Federschwingers 3,4,5 Elektroden 1 gegenüberliegend angeordnet sind, die den Wechselstromlichtbogen entlang der Lichtwellenleiter 6 führen. Der Federschwinger 3,4,5 besteht aus einem feststehenden Zapfen 5, an dem zwei Blattfedern 4 parallel zueinander angeordnet sind. Dem Zapfen 5 gegenüberliegend sind die Blattfedern 4 mit einem Keramikträger 3 verbunden, auf dem Elektrodenhalterungen 2 montiert sind, die die Elektroden 1 befestigen. Die Anordnung der Blattfedern 4 bildet ein schwingfähiges Federparallelogramm, das durch Anregung des Federschwingers 3,4,5 eine harmonische Pendelbewegung ausführt, die annähernd parallel zu den Lichtwellenleitern 6 verläuft. Durch die Pendelbewegung des Federschwingers 3,4,5 werden die Lichtwellenleiter 6 mit dem zwischen den Elektroden 1 brennenden Wechselstromlichtbogen in einem Bereich erwärmt, der über die Abrißbreite des Wechselstromlichtbogens hinausgeht. Die Länge des Erwärmungsbereiches wird von der Schwingungsamplitude des Federschwingers 3,4,5 bestimmt, die in Abhängigkeit von der Phasenlage des Federschwingers 3,4,5 und seiner Schwingungsamplitude mit einem ersten Elektromagneten 7 gesteuert und aufrechterhalten wird. Der erste Elektromagnet 7 besteht aus zwei Tauchspulen, in die zwei an den Seitenflächen des Keramikträgers 3 befestigte Eisenstifte 8 eintauchen. Sie führen dem Federschwinger 3,4,5 die durch mechanische Dämpfung verbrauchte Schwingungsenergie wieder zu und gewährleisten eine konstante, einstellbare Schwingungsamplitude.

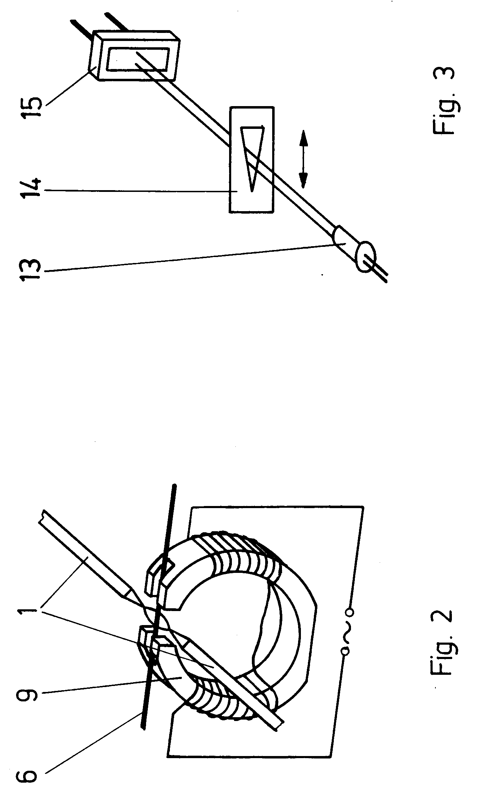

Der Federschwinger 3,4,5 pendelt annähernd mit seiner Resonanzfrequenz von 20 Hz und an seiner Unterseite ist ein in Figur 3 dargestellter Wegaufnehmer vorgesehen, der von einer keilförmigen Blende 14, einer Emitterdiode 13 und einer Fotodiode 15 gebildet wird. Die Pendelbewegung der mit dem Federschwinger 3,4,5 verbundenen keilförmigen Blende 14 ist durch einen zweiseitig gerichteten Pfeil angedeutet, während die Emitterdiode 13 und die Fotodiode 15 stationär angeordnet sind. Von der Fotodiode 15 beziehungsweise dem Wegaufnehmer wird ein analoges, den aktuellen Aufenthaltsort des Federschwingers 3,4,5 repräsentierendes Signal bereitgestellt, welches einem in Figur 1 dargestellten Analog-Digital-Wandler ADG zugeführt und in eine Bitfolge transformiert wird. Diese Bitfolge wird dann als niederwertiger Adreßteil für den Lichtbogenstrom an dem entsprechenden Ort verwendet. Den höherwertigen Adreßteil stellt ein Programm des Steuerrechners 12 bereit, mit dem die Intensität des Wechselstromlichtbogens an Orten entlang der Lichtwellenleiter 6 festgelegt wird. Hierzu sind die Adresseneinheiten des Analog-Digital-Wandlers ADC und des Steuerrechners 12 mit einem Speicher RAM verbunden, dessen Ausgänge die dem Momentanwert der Intensität des Wechselstromlichtbogens entsprechenden Signale führen. Der Speicher RAM wird vor dem Programmstart mit den erforderlichen Vektoren geladen, die die Intensität des Wechselstromlichtbogens in Abhängigkeit von der Auslenkung des Federschwingers 3,4,5 festlegen und somit das örtliche Temperaturfeld entlang der Lichtwellenleiter 6 bestimmen. Am Speicher RAM ist hierzu ein Digital-Analog-Wandler DAC angeschlossen, der mit einem steuerbaren Hochspannungsgenerator HSG verbunden ist, an dem die den Wechselstromlichtbogen führenden Elektroden 1 angeschlossen sind.

Parallel zur zeitlichen Steuerung des Wechselstromlichtbogens, die ebenfalls mit dem Steuerrechner 12 durchgeführt wird, werden über eine mit dem Steuerrechner 12 verbundene Motorsteuerung MST die, die Lichtwellenleiter 6 in nicht näher dargestellter Art und Weise aufnehmenden Tischtriebe 10 mittels Schrittmotoren 11 angetrieben.

Die taperförmigen Schmelzkoppler werden in einem gleichzeitigen Erwärmungs- und Ziehprozeß, dessen Steuerung mit dem Steuerrechner 12 entsprechend einem optimierten Programm erfolgt, hergestellt. Während des Herstellungsprozesses wird das Teilungsverhältnis mit einem Lichtleistungsmesser LM gemessen und vom Steuerrechner 12 ausgewertet. Ein optischer Sender IRS speist hierzu Licht in einen der Lichtwellenleiter 6.

Ist das gewählte Teilungsverhältnis erreicht, wird das Programm automatisch abgebrochen und der fertiggestellte taperförmige Schmelzkoppler kann nach einer Abkühlungsphase der Vorrichtung entnommen oder durch Herausschwenken der zum Erwärmen und Schmelzen erforderlichen Vorrichtungseinheit unter Beibehaltung der Einspannung in der Vorrichtung verkapselt werden.

Zum Herstellen einer aus mehr als zwei Lichtwellenleitern 6 bestehenden optischen Baugruppe ist auf dem Keramikträger 3 ein zweiter Elektromagnet 9 angeordnet, der in Figur 2 dargestellt ist. Er besteht aus einem zwischen den magnetischen Polen unterbrochenen Ringkernmagneten und ist derart angeordnet, daß der Wechselstromlichtbogen zwischen diesen Polen des Ringkernmagneten verläuft. Dieser zweite Elektromagnet 9 wird mit einer Wechselspannung gespeist, die den Wechselstromlichtbogen von der kürzesten Verbindung zwischen den Elektroden 1 ablenkt. Außerdem weisen die Polbereiche des Ringkernmagneten jeweils eine Nut auf, wodurch die Lichtwellenleiter 6 im zentralen Bereich des Magnetfeldes berührungslos positionierbar sind und der Wechselstromlichtbogen wechselseitig entlang der Lichtwellenleiter 6 geführt wird. Es wird ein homogenes Temperaturfeld erzeugt, das die Voraussetzung für eine gleichmäßige Erwärmung mehrerer Lichtwellenleiter 6 bildet und die Anforderungen an die Justage der Lichtwellenleiter 6 im Temperaturfeld verringert.

Zum wechselseitigen Führen des Wechselstromlichtbogens wird der zweite Elektromagnet 9 mit einer Wechselspannung gespeist, deren Frequenz mit der Frequenz des Wechselstromlichtbogens übereinstimmt und deren Phasenlage in den Umkehrpunkten des Federschwingers 3,4,5 um 180 Grad gedreht wird.

Das Verfahren und die Vorrichtung zum Herstellen optischer Baugruppen aus Lichtwellenleitern sind zum Herstellen gleichartiger und unterschiedlicher optischer Baugruppen geeignet und durch eine zeitliche und örtliche Steuerung des Temperaturfeldes werden nach vorgegebenen Programmen optimale geometrische Formen optischer Baugruppen aus Lichtwellenleitern erreicht, die die Voraussetzung für die Qualität der optischen Parameter bilden. Weiterhin gewährleisten die Verwendung des Wechselstromlichtbogens mit Intensitätssteuerung und der Federschwinger 3,4,5 mit hoher Konstanz der Aufenthaltswahrscheinlichkeit an einem Ort die für eine Massenfertigung erforderliche Reproduzierbarkeit des Verfahrens.

**Patentansprüche**

1. Verfahren zum Herstellen optischer Baugruppen aus Lichtwellenleitern (6), dem entsprechend in einer Vorrichtung zum Ziehen oder Stauchen mindestens ein oder mehrere aneinanderliegende Lichtwellenleiter (6) eingespannt, erwärmt und in Abhängigkeit von den optischen Parametern der optischen Baugruppe geschmolzen und verformt werden, dadurch gekennzeichnet, daß zum Erwärmen und Schmelzen der Lichtwellenleiter (6) in einem über die Abrißbreite eines Lichtbogens hinausgehenden Bereich ein Wechselstromlichtbogen verwendet wird, der durch pendelnde Bewegung der den Wechselstromlichtbogen führenden Elektroden (1) mit einem Federschwinger (3,4,5) entlang der Lichtwellenleiter (6) geführt wird.

2. Verfahren nach Patentanspruch 1, dadurch gekennzeichnet, daß die Intensität des Wechselstromlichtbogens in Abhängigkeit vom aktuellen Aufenthaltsort des Federschwingers (3,4,5) mit einem Wegaufnehmer durch Steuerung des Lichtbogenstromes geregelt wird.

3. Verfahren nach Patentanspruch 1 oder 2, dadurch gekennzeichnet, daß der pendelnd entlang der Lichtwellenleiter (6) geführte Wechselstromlichtbogen mit einem zweiten Elektromagneten (9) wechselseitig entlang der Lichtwellenleiter (6) geführt wird.

4. Vorrichtung zum Herstellen optischer Baugruppen aus Lichtwellenleitern (6), die aus einer Vorrichtung zum Ziehen oder Stauchen mindestens eines oder mehrerer aneinanderliegend eingespannter Lichtwellenleiter (6) besteht, welche erwärmt und in Abhängigkeit von den optischen Parametern der optischen Baugruppe geschmolzen und verformt werden, dadurch gekennzeichnet, daß einen Wechselstromlichtbogen pendelnd entlang der Lichtwellenleiter (6) führende Elektroden (1) auf einem Federschwinger (3,4,5) senkrecht zur Pendelbewegung des Federschwingers (3,4,5) gegenüberliegend angeordnet sind und ein erster Elektromagnet (7) zum Steuern und Aufrechterhalten der Schwingungsamplitude des Federschwingers (3,4,5) vorgesehen ist.

5. Vorrichtung nach Patentanspruch 4, dadurch gekennzeichnet, daß der Federschwinger (3,4,5) ein aus Blattfedern (4) bestehendes Federparallelogramm ist.

6. Vorrichtung nach Patentanspruch 4 oder 5, dadurch gekennzeichnet, daß zum Steuern der Intensität des Wechselstromlichtbogens in Abhängigkeit vom aktuellen Aufenthaltsort des Federschwingers (3,4,5) ein den Lichtbogenstrom regelnder Wegaufnehmer vorgesehen ist.

7. Vorrichtung nach Patentanspruch 6, dadurch gekennzeichnet, daß der Wegaufnehmer eine mit dem Federschwinger (3,4,5) verbundene und zwischen einer Emitterdiode (13) und einer Fotodiode (15) angeordnete keilförmige Blende (14) ist.

8. Vorrichtung nach einem der Patentansprüche 4 bis 7, dadurch gekennzeichnet, daß auf dem Federschwinger (3,4,5) ein zweiter, den Wechselstromlichtbogen wechselseitig entlang der Lichtwellenleiter (6) führender Elektromagnet (9) angeordnet ist.

9. Vorrichtung nach Patentanspruch 8, dadurch gekennzeichnet, daß der zweite Elektromagnet (9) ein zwischen den magnetischen Polen unterbrochener Ringkernmagnet ist, dessen magnetische Polbereiche jeweils eine, die Lichtwellenleiter (6) im zentralen Bereich des Magnetfeldes berührungslos positionierbare Nut aufweisen.

Fig. 1

MST   ADC   RAM   DAC   LM

IRS

HSG

EP 0 503 172 A1

Fig. 3

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | US-A-4 392 712 (T. OZEKI) <br> * Spalte 3, Zeile 25 - Spalte 7, Zeile 34; Abbildungen 1-12 * <br> --- | 1,4 | G02B6/28 <br> G02B6/225 |
| A | PATENT ABSTRACTS OF JAPAN <br> vol. 9, no. 323 (P-414)(2046) 18. Dezember 1985 <br> & JP-A-60 150 011 ( FUJI DENKI SOUGOU KENKYUSHO ) 7. August 1985 <br> * Zusammenfassung * <br> --- | 1,4 | |
| A | FREQUENZ. <br> Bd. 37, Nr. 9, September 1983, BERLIN DE <br> Seiten 226 - 231; <br> T. SCHWANDLER ET AL.: 'Rechnergesteuerte Herstellung von Gradientenfaser-Richtkopplern für bidirektionale Nachrichtenübertragung' <br> * das ganze Dokument * <br> --- | 1,4 | |
| A | EP-A-0 303 318 (PHILIPS) <br> * das ganze Dokument * <br> ----- | 1,4 | RECHERCHIERTE SACHGEBIETE (Int. Cl.5 ) <br><br> G02B |

Der vorliegende Recherchenbericht wurde für alle Patentansprüche erstellt

| Recherchenort | Abschlußdatum der Recherche | Prüfer |
|---|---|---|
| DEN HAAG | 14 NOVEMBER 1991 | SARNEEL A.P. |